# EUROPÄISCHE PATENTANMELDUNG

(11) **EP 0 847 815 A1**
(43) Veröffentlichungstag der Anmeldung: **17.06.1998**
(21) Anmeldenummer: 97121728.6
(22) Anmeldetag: 10.12.1997
(51) Int. Cl.: B21B 15/00, B22D 19/04, B23K 28/00

(54) **Verfahren und Vorrichtung zum Walzen von Knüppeln**

(30) Priorität: 14.12.1996 DE 19652088
(71) Anmelder: SMS SCHLOEMANN-SIEMAG AKTIENGESELLSCHAFT, 40237 Düsseldorf (DE)
(72) Erfinder: Roloff, Wolfgang, 41238 Mönchengladbach (DE); Hartung, Hans-Georg, Dr., 50259 Pulheim (DE); Hollman, Friedrich Wilhelm, Dr., 41516 Grevenbroich (DE); Mauk, Paul-Josef, Dr., 40470 Düsseldorf (DE)
(74) Vertreter: Valentin, Ekkehard

(57) **Zusammenfassung**

Beim Walzen von Einzelknüppeln, beispielsweise aus einer Stranggießanlage, ergeben sich durch die diskontinuierliche Fahrweise sowie durch unterschiedliche Knüppelgewichte erhebliche Nachteile sowie Produktionsausfälle durch beispielsweise anfallende nicht verkäufliche Unterlängen. Gemäß der Erfindung wird vorgeschlagen, die Einzelknüppel (1, 2) vor dem Walzvorgang durch eine Schmelze (4) miteinander zu verbinden, so dass auf diese Weise ein "unendlich" langer Strang entsteht und der Walzvorgang kontinuierlich durchgeführt werden kann.

## Beschreibung

Die Erfindung betrifft ein Verfahren und eine Vorrichtung zum Walzen von Knüppeln, vorzugsweise aus einer Stranggießanlage, bei dem bzw. der die aus der Stranggießanlage austretenden Stränge zu Knüppeln in Handelslängen zerteilt und einer Walzanlage zugeführt werden.

Die Aufteilung in Einzelknüppel ist erforderlich, um einen Transport der Stränge von der Stranggießanlage zur Walzanlage durchführen zu können, insbesondere dann, wenn die Stranggießanlage räumlich von der Walzanlage getrennt ist. Da auf diese Weise der kontinuierliche Strangprozeß vom Walzprozeß entkoppelt ist, werden bei bekannten Verfahren die Knüppel als Einzelknüppel der Walzanlage zugeführt.

Beim Walzen kommt es dann aufgrund schwankender Einzelknüppelgewichte oftmals zu Restlängen, die ein nicht ganzzahliges Vielfaches der Handelslängen sind, d.h., es ergeben sich Unterlängen, die nicht den Handelslängen entsprechen. Diese Unterlängen müssen dann zumeist mühsam von Hand aus einer fertig gesammelten Handelslängen-Lage entfernt werden oder der Kilopreis des gebündelten Pakets wird entsprechend herabgesetzt.

Zur Vermeidung derartiger Nachteile wird deshalb in der DE 36 36 785 A1 vorgeschlagen, das von einem Walzgerüst kommende Walzgut in Schnittlängen zu unterteilen, die Restlänge nach der letzten Walzgutteilung zu vermessen und die sich ergebende Unterlänge vor der Aufteilung in Handelslängen abzutrennen und auszufördern, wobei ein speziell gestaltetes Kühlbett zur Anwendung kommt. Neben diesem doch beträchtlichen meßtechnischen und anlagenspezifischen Aufwand, mit dem die Unterlängen zwar ausgeschleust, aber nicht vermieden werden, kommt es bei der Einzelknüppelfahrweise, d.h. beim Walzen einzelner Knüppel immer wieder zu Störungen, die auf dem diskontinuierlichen Betrieb der Walzanlage beruhen.

Es ist Aufgabe der Erfindung, die geschilderten Nachteile, die bei bekannten Verfahren beim Walzen von Einzelknüppel auftreten, durch ein verbessertes Verfahren zum Walzen von Knüppeln und durch eine diesem verbesserten Verfahren angepaßte Vorrichtung weitgehend zu vermeiden.

Die gestellte Aufgabe wird verfahrensmäßig mit den Maßnahmen des Kennzeichnungsteils des Anspruchs 1 gelöst und vorrichtungsmäßig mit den Merkmalen des Kennzeichnungsteils des Anspruchs 9 beim Walzen von Knüppeln, vorzugsweise aus einer Stranggießanlage, bei dem die aus der Stranggießanlage austretenden Stränge zu Knüppeln in Handelslängen zerteilt und dann einer Walzanlage zugeführt werden, dadurch, dass vor dem Walzen der nachfolgende Knüppel mit Abstand an den in der Walzanlage befindlichen ungeteilten Knüppel herangefahren und die beiden Enden dieser beiden Knüppel als Fügeenden in einer Kokille, die die beiden Fügeenden formschlüssig umschließt, durch Auffüllen des Zwischenraums zwischen den Fügeenden mit einer Schmelze zusammengefügt werden.

Die Schmelze besteht dabei aus einem Werkstoff, der nach seiner Abkühlung die gleichen Eigenschaften wie der Grundwerkstoff der Knüppel aufweist, so dass die Fügeverbindung im nachfolgenden Walzprozeß umformbar ist und keine Fügenaht entsteht, die am Ende des Walzprozesses herausgeschnitten werden muß.

Aus dem gleichen Grund ist es erforderlich, die Fügeenden vorher zu entzundern bzw. die mit Zunder verunreinigte Schmelze aus der Kokille auszuspülen, damit ein optimaler Kontakt ohne Verunreinigungen zwischen den Fügeenden und der Schmelze erfolgen kann.

Damit das nachfolgende Walzen ohne Entstehung von Walzfehlern ermöglicht wird, umschließt die Kokille die beiden Fügeenden formschlüssig, so dass die Schmelze den Zwischenraum zwischen den Fügeenden vollständig ausfüllen kann, und die Fügestelle nach ihrer Abkühlung auf Knüppeltemperatur die gleiche Umhüllende hat wie die beiden Fügeenden.

Das Zusammenfügen geschieht nach einer vorteilhaften Ausgestaltung der Erfindung während des Einlaufprozesses und mit der Einzugsgeschwindigkeit des ungeteilten Knüppels in die Walzanlage bei niedrigen Walzgeschwindigkeiten, wobei die Kokille, die die beiden Fügeenden umschließt, mit der gleichen Einzugsgeschwindigkeit wie die Knüppel bewegt wird. Entweder durch Ankoppeln an den ungeteilten Knüppel, oder durch einen eigenen Antrieb, der die Kokille mit der Einzugsgeschwindigkeit der Knüppel bewegt. Die Kokille ist dabei auf einem fahrbaren Untersatz angeordnet, der seitlich neben den Knüppeln oder unterhalb der Knüppel durch eine Antriebsvorrichtung hin- und herbewegt werden kann.

Damit während des Zusammenfügens durch die verbindende Schmelze keine Schmelznähte (Grate) entstehen, die zu überwalzungen oder anderen Walzfehlern führen können, wird die Kokille zusätzlich zur Einzugsgeschwindigkeit mit einer von dieser abweichenden Relativbewegung langsam an der Fügestelle vorbeigeführt, wobei entstehende Grate "verwischt" werden. Diese Relativgeschwindigkeit kann Langsamer oder schneller als die Einzugsgeschwindigkeit sein oder die Kokille wird oszillierend langsam an der fügestelle vorbei vor- und zurückbewegt.

Damit das Zusammenfügen während des Einlaufprozesses mit der Einzugsgeschwindigkeit des ungeteilten Knüppels durchgeführt werden kann, muß auch das Eingießen der Schmelze bei dieser Geschwindigkeit erfolgen. Es ist also notwendig, die Kokille so mit einer Gießanlage zu verbinden, dass das Eingießen der Schmelze in die sich bewegende Kokille reibungslos durchgeführt werden kann. Das Eingießen der Schmelze geschieht nach einer Ausgestaltung der Erfindung mit Überdruck oder alternativ so, dass der Stopfen der Kokille stetig entsprechend dem Schmelzschwund nachgestellt wird.

Das Zusammenfügen einzelner Knüppel zu einem "unendlich" langen Strang nach dem Verfahren der Erfindung ermöglicht, die Walzanlage kontinuierlich zu betreiben. Die genannten Nachteile, die durch das Walzen von Einzelknüppeln auftreten, werden somit erfolgreich vermieden, wodurch das Walzen insgesamt wirtschaftlicher durchgeführt werden kann, da beispielsweise beim kontinuierlichen Walzen keine Unterlängen mehr anfallen.

Weitere Vorteile, Einzelheiten und Merkmale der Erfindung sind den nachfolgenden Erläuterungen zu einem in Zeichnungsfiguren dargestellten Auführungsbeispiel zu entnehmen.

Es zeigen:
- Fig. 1: einen schematischen Längsschnitt durch eine Kokille mit eingeschobenen Knüppeln,
- Fig. 2: eine Draufsicht auf eine Kokille entsprechend der Fig. 1 mit ihrem Untersatz.

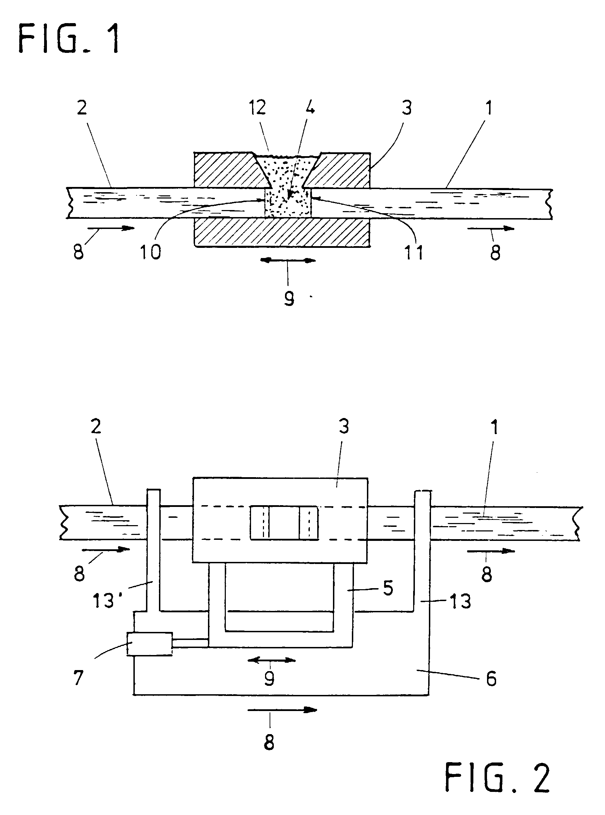

In den Figuren 1 und 2 ist der nachfolgende Knüppel (2) an den bereits in der Walzanlage bzw. dem ersten Walzgerüst befindlichen ungeteilten Knüppel (1) mit Abstand herangefahren, und die Knüppelenden als Fügeenden (10, 11) sind von der Kokille (3) umschlossen.

Die beiden Knüppel (1, 2) sowie die Kokille (3) bewegen sich mit der Einzugsgeschwindigkeit des ungeteilten Knüppels in Pfeilrichtung (8) auf das erste Walzgerüst zu, wobei die Kokille (3) entweder durch eine separate Antriebsvorrichtung auf diese Geschwindigkeit gebracht wird oder aber sie wird mit einer entsprechend ausgebildeten Haltevorrichtung (13) an den ungeteilten Knüppel (1) angekuppelt.

Die Kokille (3) ist bei dem dargestellten Ausführungsbeispiel über eine Halterung (5) mit einem seitlich neben der Walzlinie fahrbaren Untersatz (6) verbunden. Gemäß der Erfindung könnte dieser Untersatz jedoch auch unterhalb oder auch oberhalb der Knüppel (1, 2) angeordnet sein.

Der im gezeigten Ausführungsbeispiel über die Haltevorrichtung (13) an den ungeteilten Knüppel (1) angekuppelten Untersatz (6) wird nun durch den Knüppel (1) mit dessen Einzugsgeschwindigkeit gezogen. Durch eine zweite Haltevorrichtung (13'), die an den Knüppel (2) angekuppelt ist, wird während des Gieß- und Erstarrungsvorgangs der Schmelze (4) der Abstand der Fügeenden (10, 11) konstant gehalten.

Die Kokille (3) mit ihrer Halterung (5) ist auf dem Untersatz (6) in Pfeilrichtung (9) beweglich angeordnet, so dass sie mit einer Relativbewegung zu ihrem Untersatz (6) und damit auch zu den Fügeenden (10, 11) im Sinne der Erfindung bewegt werden kann. Ausgeführt wird diese Relativbewegung im dargestellten Ausführungsbeispiel durch eine Vorrichtung (7), beispielsweise eine Kolben-Zylindereinheit.

Bei der Durchführung des Verfahrens der Erfindung wird nach dem Entzundern der beiden Fügeenden (10, 11) der Folgeknüppel (2) an den Einzugsknüppel (1) mit Abstand herangefahren und die Fügeenden (10, 11) werden mit der Kokille (3) umschlossen. Sodann werden die beiden Halterungen (13, 13') an die Knüppel (1, 2) angekuppelt. Durch eine Gießanlage (in den Zeichnungsfiguren nicht dargestellt) wird nun die Kokille (3) mit einer Schmelze (4) aufgefüllt, wobei entweder der Stopfen (12) der Kokille (3) stetig entsprechend dem Schmelzenschwund nachgestellt wird oder aber es wird mit Überdruck gegossen.

Um den Gießvorgang, der auch mit der Einzugsgeschwindigkeit des Knüppels (1) erfolgt, bei dieser Geschwindigkeit durchzuführen, ist eine entsprechend ausgebildete Gießanlage (in der Zeichnung nicht dargestellt) installiert, die fahrbar ausgebildet sein kann oder aber über entsprechende Schmelzförderleitungen den Gießvorgang ermöglicht.

Während und/oder nach dem Gießvorgang wird die Kokille (3) langsam mit einer Relativbewegung an der Fügestelle vorbei bewegt. Die Relativbewegung kann dabei langsamer oder schneller als die Einzugsgeschwindigkeit sein oder aber es findet eine oszillierende Bewegung in Pfeilrichtung (9) statt. Sinn dieser Maßnahme ist, dass keine Grate an der Fügestelle entstehen, die beim nachfolgenden Walzen zu Walzfehlern führen.

Nach entsprechender Abkühlung wird die Kokille (3) von der Fügestelle entfernt und mit ihrem Untersatz (6) zu einem neuen Einsatz zurückgefahren.

Das in den Zeichnungsfiguren dargestellte Ausführungsbeispiel stellt nur eine von mehreren Möglichkeiten dar, Einzelknüppel durch Aneinanderfügen mit einer Schmelze gemäß der Erfindung zu einem einheitlichen Strang miteinander zu verbinden, um auf diese Weise einen kontinuierlich durchführbaren Walzvorgang zu ermöglichen.

## Patentansprüche

1. Verfahren zum Walzen von Knüppeln, vorzugsweise aus einer Stranggießanlage, bei dem die aus der Stranggießanlage austretenden Stränge zu Knüppeln in Handelslängen zerteilt und dann einer Walzanlage zugeführt werden, **dadurch gekennzeichnet**, dass vor dem Walzen der nachfolgende Knüppel (2) mit Abstand an den in der Walzanlage befindlichen ungeteilten Knüppel (1) herangefahren und die beiden Knüppelenden als Fügeenden (10, 11) in einer Kokille (3), die die beiden Fügeenden (10, 11) formschlüssig umschließt, durch Auffüllen des Zwischenraums zwischen den Fügeenden (10, 11) mit einer Schmelze (4) zusammengefügt werden.

2. Verfahren nach Anspruch 1, **dadurch gekennzeichnet**, dass die Schmelze (4) aus einem Werkstoff besteht, der nach Abkühlung die gleichen Eigenschaften wie der Grundwerkstoff der Knüppel (1, 2) aufweist.

3. Verfahren nach Anspruch 1 oder 2, **dadurch gekennzeichnet**, dass das Zusammenfügen während des Einlaufprozesses und mit der Einzugsgeschwindigkeit des Knüppels (1) in das erste Walzgerüst erfolgt.

4. Verfahren nach Anspruch 3, **dadurch gekennzeichnet**, dass während des Zusammenfügens die Kokille (3) zusätzlich mit einer Relativgeschwindigkeit zur Fügestelle langsam bewegt wird, die langsamer oder schneller als die Einzugsgeschwindigkeit sein kann, oder durch die die Kokille (3) oszillierend in Pfeilrichtung (9) langsam an der Fügestelle vorbei vor- und zurückbewegt wird.

5. Verfahren nach einem oder mehreren der Ansprüche 1 bis 4, **dadurch gekennzeichnet**, dass die Fügeenden (10, 11) vor ihrem Zusammenfügen an ihrer Oberfläche entzundert werden.

6. Verfahren nach einem oder mehreren der Ansprüche 1 bis 5, **dadurch gekennzeichnet**, dass der Zwischenraum zwischen den beiden Fügeenden (10, 11) mit Schmelze (4) so ausgefüllt wird, dass die Fügestelle nach der Abkühlung auf Knüppeltemperatur die gleiche Umhüllende hat wie die beiden Fügeenden (10, 11).

7. Verfahren nach einem oder mehreren der Ansprüche 1 bis 6, **dadurch gekennzeichnet**, dass das Eingießen der Schmelze (4) in die Kokille (3) mit Überdruck erfolgt.

8. Verfahren nach einem oder mehreren der vorhergehenden Ansprüche 1 bis 6, **dadurch gekennzeichnet**, dass der Stopfen (12) der Kokille (3) stetig entsprechend dem Schmelzenschwund nachgestellt wird.

9. Vorrichtung zum Walzen von Knüppeln, vorzugsweise aus einer Stranggießanlage, bei dem die aus der Stranggießanlage austretenden Stränge zu Knüppeln in Handelslängen zerteilt und dann einer Walzanlage zugeführt werden, zur Durchführung des Verfahrens nach einem oder mehreren der vorhergehenden Ansprüche, **gekennzeichnet durch** eine mit der Einzugsgeschwindigkeit des Knüppels (1) in die Walzanlage bei niedrigen Walzgeschwindigkeiten verfahrbare Kokille (3), die zusätzlich mit einer Relativgeschwindigkeit langsamer, schneller oder oszillierend vor und zurück an der Fügestelle vorbeibewegt werden kann und die dabei mit einer Gießanlage verbunden ist.

10. Vorrichtung nach Anspruch 9, **dadurch gekennzeichnet**, dass die Kokille (3) auf einem verfahrbaren, separat angetriebenem Untersatz angeordnet ist, der seitlich neben und/oder unterhalb der Knüppel (1, 2) geführt ist.

11. Vorrichtung nach Anspruch 9, **dadurch gekennzeichnet**, dass die Kokille (3) mit ihrem Untersatz (6) an den Knüppel (1) angekuppelt ist und die Relativgeschwindigkeit der Kokille zur Fügestelle durch eine auf dem Untersatz angeordnete Antriebsvorrichtung erzeugbar ist, wobei die Kokille (3) relativ zu ihrem Untersatz (6) bewegbar ist.

12. Vorrichtung nach einem oder mehreren der Ansprüche 9 bis 11, **dadurch gekennzeichnet**, dass die Innenflächen der Kokille (3) der äußeren Oberfläche der Knüppel (1, 2) so entsprechen, dass sie die Fügeenden (10, 11) der Knüppel (1, 2) exakt umhüllen.
